# EUROPEAN PATENT APPLICATION

(11) **EP 4 834 116 A1**
(43) Date of publication of application: **04.11.2026**
(21) Application number: 25173787.0
(22) Date of filing: 30.04.2025
(51) Int. Cl.: A22C 11/12, G05B 23/02

(54) **CLIPPING MACHINE SYSTEM AND OPERATING METHOD WITH WEAR MONITORING**

(71) Applicant: Poly-clip System GmbH & Co. KG, 65795 Hattersheim (DE)
(72) Inventor: Scheding, Markus, 65239 Hochheim (DE); Oezel, Hayrettin, 65933 Frankfurt (DE); Wolkenhauer, Denis, 60437 Frankfurt (DE)
(74) Representative: Eisenführ Speiser

(57) **Abstract**

The invention relates to a clipping machine system (1) including a clipping machine (3) comprising a plurality of wear components (43); a control device (33) configured to acquire operating parameters (P) of the clipping machine (3); a wear monitoring unit (35) for monitoring a wear value (V_{W,i}) of an associated wear component (43); at least one wear scaling module (37) configured to receive the acquired operating parameter (P); determine an individual scaled wear value (VS_{W,i}) based on the operating parameter (P) using an individual scaling function (FSᵢ), and update the wear value (V_{W,i}) with the respective determined individual scaled wear value (VS_{W,i}); and an output module (39) configured to provide a status output (O) for at least one wear component (43) at an interface. The invention further relates to a method (200) for operating a clipping machine system and to a computer program product.

## Description

The invention relates to a clipping machine system including a clipping machine for producing sausage-shaped products, the clipping machine comprising a plurality of wear components; at least one control device configured to control an operation of the clipping machine and to acquire operating parameters of the machine; and at least one wear monitoring unit for monitoring a wear value of an associated wear component of the plurality of wear components of the clipping machine. The invention further relates to a method for operating a clipping machine system for producing sausage-shaped products.

In practice, packaging machines, like clipping machines, are known, for producing sausage-shaped products, like edible sausages, in which filling material is fed into a tubular or bag-shaped packaging casing which is stored on a filling tube, and which is closed at its front end by a closure means, like a closure clip, i.e. the end of the packaging casing pointing in the feeding direction of the filling material. After a predetermined portion of filling material has been fed into the tubular or bag-shaped packaging casing, the filled tubular or bag-shaped packaging casing is gathered by gathering means, a plait-like portion being at least substantially free from filling material is formed thereto, and a first closure clip is placed and closed on said plait-like portion by a clipping device, for closing the portion of the tubular or bag-shaped packaging casing just filled. Additionally, a second closure clip may be placed for closing the front end of the sausage-shaped product to be produced next. For severing the sausage-shaped product just produced from the remaining supply a tubular or bag-shaped packaging casing, a cutting device may be provided for cutting off the plait-like portion between the first and second closure clip. The sausage-shaped product just produced may then be discharged from the clipping machine by a discharge device, like a belt conveyor, for further treatment, like cooking or smoking.

Such clipping machines include one or more movable components, like a clipping device or gathering means, which are driven separately or commonly by a respective drive device, like an electric motor or a pneumatic or hydraulic drive device. Said components include mechanical assemblies, like linear guidances or pivot arrangements, which include bearings or support surfaces being in sliding contact with respective counter surfaces.

For large scale production of sausage-shaped products, highly automated clipping machines are known that are configured to perform operating cycles at a rate of 3 Hz or more. An operating cycles usually includes formation of a plait-like portion by the displacer device and application of at least one closure clip. An operating cycle can include additional task, such as a cutting operation for separating a filled product from a supply of casing material. Due to the high operating speeds and the considerable forces required for deforming metal closure clips, high forces are required for moving the movable components. The high forces provide considerable stresses to the movable components and structural elements of the clipping machine. Moreover, vibrations of the machine can damage other components of the machine. A clipping machine therefore has a plurality of components that are subjected to wear or that can get damaged. Such components are wear components of a clipping machine.

Downtimes of clipping machines, in particular downtimes of highly clipping machines capable of producing 200 or more sausages per minute, can be very costly. For example, pre-produced filling material may not be used up in time and/or production rates may not be fulfilled. To minimize downtime, it is common practice to perform regularly scheduled maintenance. Generally, maintenance of the clipping machines is based on a total number of working hours or working cycles performed by the clipping machine. During maintenance, many parts of clipping machines that are not fully worn out or not damaged are often replaced as a safety measure. This is done to reduce the risk of a wear event, such as a broken or worn out punch, in between maintenance events as far as possible.

However, such a maintenance solution is not wholly satisfactory, since it may lead wear parts of the filling machine being replaced while still in a proper operating condition. Replacement of such parts takes time and increases the overall operating cost of a clipping machine. Moreover, some wear parts of the clipping machine can wear out or an unforeseen damage of a wear part can occur before a total number of working hours is reached or a predefined number of working cycles performed has occurred with the consequence of unplanned downtimes. These problems are increased by the fact that clipping machines are often used to produce different kinds of products, for example sausages of different sizes. A change of product can require a change of operating parameters. For example, closure clips of a different size may be used leading to different forces required for closing such a clip. The varying operating conditions make proper scheduling of maintenance even more challenging.

The aim of the present invention is consequently to solve, at least in part, the problems previously highlighted, and in general to provide a clipping machine system and a method for operating a clipping machine system that facilitate correct and necessary maintenance of a clipping machine, in particular a clipping machine operated with varying operating parameters.

According to a first aspect, the invention solves this problem with a clipping machine system as defined in independent claim 1. In particular, the invention solves the problem with a clipping machine system including a clipping machine for producing sausage-shaped products, the clipping machine comprising a plurality of wear components; at least one control device configured to control an operation of the clipping machine and to acquire operating parameters of the machine; at least one wear monitoring unit for monitoring a wear value of an associated wear component of the plurality of wear components of the clipping machine; at least one wear scaling module configured to receive the acquired operating parameter; determine an individual scaled wear value for each wear monitoring unit based on the received operating parameter using an individual scaling function, and update the wear value of each wear monitoring unit with the respective determined individual scaled wear value; and an output module configured to provide a status output for at least one wear component at an interface based on the wear value of the wear monitoring unit associated with the wear component.

A wear component is a component that is subjected to wear during use of the machine. Wear may occur gradually or suddenly. For example, a tool may be worn down gradually or brake suddenly. The control device is or includes a computer, processor, microcontroller, server or the like. The control device is configured to control an operation of the clipping machine. For example, the control device can control one or more motors of the clipping machine such that gathering means of the clipping machine divide a filled casing into separate sausages. The control device is further configured to acquire operating parameters. In the context of the present disclosure, an operating parameters is a parameter characterizing operation of the clipping machine. An operating parameter can be an input parameter or set parameter respectively provided, for example, by a machine operator. An operating parameter can be a product property of a product to be produced or a parameter derived from a product property. For example, the operating parameter can be a product diameter of a product to be produced or a size and type of closure clip used for closing the product. Other operating parameters can be derived from such a product property. For example, a clip pressure applied to the closure clip by a tool for deforming and closing the closure clip. The operating parameter can also be a measurement value and/or can be based on a measurement value.

The control device can acquire the operating parameters via an input from a user, for example via a human-machine-interface such as a touch display. Preferably, the control device is configured to acquire operating parameters from a predefined set of operating parameters and/or a measurement. For example, a plurality of sets of operating parameters corresponding to different products may be stored in a memory of the clipping machine. When an operator of the machine defines the product to be produced, the control device can be configured to acquire the set of operating parameters corresponding to this product from the sets of operating parameters stored in the memory. The control device can further be configured to acquire operating parameters by deriving operating parameters from a user input, at least partially based on external signals and/or at least partially based on measurements. For example, the control device can be configured to derive a clip pressure from a user input defining the type of closure clips to be used. Preferably, the control device is configured to acquire at least one operating parameter by deriving an operating parameter corresponding to a user input from a pre-stored list of corresponding sets of user inputs and operating parameters. The control device can be configured to acquire operating parameters via one or more sensors. For example and preferably, the control device can be configured to acquire a motor current, motor voltage, motor torque and/or motor power consumption of an electric motor of the clipping machine. The control device can be configured to acquire operating parameters based on external signals, in particular signals provide from other machines collaborating with the clipping machine in the production of sausage-shape products, in particular a filler. For example, the control device can be configured to send a filling start signal to a filler connected to a filling pipe of the clipping machine. The control device can further be configured to measure a time until the filler sends a filling end signal to the clipping machine and to determine the operating parameter "filing time", which represents the time required for filling a sausage-shaped product, from the time between the filling start signal and the filling end signal. Preferably, the operating parameters are normalized parameters and/or the control device is configured to determine normalized parameters from the acquired operating parameters. Normalized operating parameters are preferably provided as a value in the range of 0 to 1 or 0% to 100% respectively.

The wear value is a value that quantifies wear of the wear component. It shall be understood that the wear value can include some error. The wear value therefore must not perfectly represent an actual condition of the wear component. The wear value rather represents an approximation of a wear and/or conditioned of the wear component. The wear monitoring unit is configured to monitor the wear value of the associated wear component. Preferably, the wear monitoring unit is configured to log the wear value, in particular during operation of the clipping machine.

The at least one wear scaling module determines an individual scaled wear value for each monitoring unit. For determining an individual scaled wear value the wear scaling module uses an individual scaling function. The individual scaled wear value is a wear value that is individually scaled for the associated wear component. The individual scaling function is an individual scaling function for the wear monitoring unit or the wear component associated with this wear monitoring unit respectively. The wear scaling module thus determines a scaled wear value that is individual for each wear monitoring unit or wear component associated with the wear monitoring unit respectively. For a clipping machine system having a plurality of wear monitoring units, the individual scaling function for a first wear monitoring unit can be different to the individual scaling function of a second wear monitoring unit associated with another wear component. However, it shall be understood that in some cases the individual scaling function of wear monitoring units can be the same. This may, for example, be the case if the wear components have similar wear behavior. The determination of the individual scaled wear value is based on the operating parameters received by the at least one wear scaling module. The operating parameters may be directly or indirectly represented in the scaling function. For example and preferably, an operating parameter and/or a normalized value of an operating parameter can form a factor in the scaling function. However, it shall be understood that the individual scaling function could additionally or alternatively also be adapted based on the operating parameters. For example, a first individual scaling function may be used for a first value of an operating parameter and a second individual scaling function different from the first individual scaling function may be used if the same operating parameter has a second value different from the first value. The operating parameter can have an influence on the individual scaling function or its components and/or can be a component (e.g. a factor, constant or the like) of the individual scaling function. The wear value of each wear monitoring unit is then updated by the wear scaling module with the respective determine individual scaled wear value. For example and preferably, the wear scaling module can replace a previous wear value with the individual scaled wear value. Additionally or alternatively, the wear value can be updated by adding or subtracting the individual scaled wear value from the wear value monitored by the respective wear monitoring unit.

The inventors have found that the influence of an operating parameter on different wear components can vary significantly. This is particularly the case for clipping machines as these machines are usually highly adaptable to specific product requirements such as product length, product diameter, casing material, filling material, clip material, clip size, clip shape and the like. While a change of one operating parameter may have a big influence on the lifetime of a first wear component, the influence on a second wear component may be insignificant. For example, a change in the viscosity of the filling material may have a strong influence on the strains put on gathering means forming the plait-like portion by displacing the filling from the part of the casing that is gathered into the plait-like portion. On the other hand, the effect of the viscosity of the filling material on the wear behavior of a punch may be negligible, since the closure clips are usually provided to a plait-like portion substantially free of filling material. The lifetime of wear components of the clipping machine may therefore vary significantly dependent on the operating conditions. Predicting and/or monitoring the wear status of wear components is therefore particularly difficult for clipping machines. The complexity is further increased, since the operating parameters of clipping machines are usually changed many times during the lifetime of a wear component. The inventors have found that providing a wear monitoring unit for monitoring wear of an associated component facilitates tracking of the wear value of this component. The wear scaling module takes into account the varying effects of operating parameters on different wear components.

The output module is configured to provide a status output for at least one wear component. The status output is based on the (updated) wear value of the wear component. In the simplest configuration, the wear value of the wear monitoring unit is the status output. In other embodiments, the status output includes additional information or data and/or is derived from the wear value of the wear monitoring unit. For example, the status output can be an expected remaining life time of the wear component associated with the respective wear monitoring unit. The status output is provided to an interface. The interface can be a display, a data transfer interface, a wireless interface, a speaker or the like. For example, the interface can be a wireless interface that is configured to wirelessly transmit the wear status to another device, such as a handheld device, a (cloud) server or a computer.

Preferably, the at least one wear monitoring unit and/or the at least one wear scaling module are subunits, in particular virtual subunits of a control device of the clipping machine, in particular a main control device of the clipping machine.

The invention is not limited to clipping machine systems. In other preferred configurations, the invention solves the problem with a machine system including another type of machine, in particular a food production machine system including a filling machine, a hanging line for hanging food products, a sealing machine or the like. Such machines can also comprise a plurality of wear components.

According to a first preferred embodiment, the wear scaling module is configured to determine a number of operating cycles of the clipping machine, in particular a number of operating cycles of the clipping machine performed with the acquired operating parameters. Preferably, the control device of the clipping machine is configured to count a number the operating cycles and the wear scaling module determines the number of operating cycles via the control device. In some configurations, the wear scaling module itself can be configured to count the operating cycles and/or the clipping machine system comprises a cycle counting unit for counting the operating cycles. Preferably, the wear scaling module is configured to determine a number of operating cycles of the clipping machine performed with each set of operating parameters since a wear start event. The wear start event can be an overhaul or replacement of the wear component. If the wear scaling module is configured to update the wear value of each wear monitoring unit after each operating cycle of the clipping machine, the control device and/or the wear scaling module must not be configured to determine a number of operating cycles.

Preferably, the wear value comprises a wear counter representing wear cycles of the associated wear component. The wear scaling module is preferably configured to determine an individual scaled wear counter based on the received operating parameters and the determined number of operating cycles performed by the clipping machine using an individual scaling function. The wear scaling module is configured to update the wear counter based on the individual scaled wear counter. A number of operating cycles performed by the clipping machine and/or a wear component usually has a great influence on the lifetime of the wear component, in particular if the wear component is a movable component. The wear counter represents the wear of the wearable machine in the form of a virtual number of operating cycles performed by the component. For a wear component having a lifetime of 10.000 cycles, a wear counter of 5.000 cycles can represent a wear component having reached half of its lifetime or a medium wear respectively.

The wear value including a wear counter is particularly useful as the number of operating cycles usually directly corresponds to the number of products produced with the clipping machine. This facilitates scheduling a maintenance operation and prevents unforeseen downtimes. The wear scaling module is configured to determine an individual scaled wear counter. For determining the individual scaled wear counter, the wear scaling module takes into account the actual number of operating cycles performed by the clipping machine. Additionally, the wear scaling module bases the determination of the individual scaled wear counter on the received operating parameters. It shall be understood that the wear counter does not necessarily equal the number of cycles performed by the clipping machine and/or wear component. For a clipping machine operated under harsh conditions, the wear counter of a wear monitoring unit associated with a wear component is usually higher than the actual number of cycles performed by the wear component. For example, if large clips made from a hard material are used, the punch and the die of the clipping machine can wear out quickly. A wear counter updated based on the individual scaled wear counter can then represent a wear counter of 5.000 operating cycles while the clipping machine has only performed a total of 3.500 operating cycles. In other words, 5.000 operating cycles of the punch and the die wear "used up" by performing only 3.500 cycles of the clipping machine under very hard operating conditions resulting from specific operating parameters (clip size, clip material).

In some embodiments, the operating parameter(s) may also lead to a reduced (updated) wear counter. For example, a wear counter of a knife for severing the plait-like portion after application of the closure clip can be reduced if chains of sausages are produced and the knife is only operated after producing a specific number of sausages linked together. The "length" of the sausage chain or number of sausages per sausage chain respectively can then represent an operating parameter based on which the individual scaled wear counter of the knife is determined by the wear scaling module.

Preferably, the status output includes the updated wear counter. For example, the updated wear counter can be shown on a screen of the clipping machine forming the interface.

In some preferred configurations, the status output for the wear component includes a remaining number of operation cycles of the clipping machine until the respective wear component is worn out. It shall be understood that the remaining number of operation cycles is a predicted number of remaining operation cycles. The remaining number of operation cycles included in the status output can therefore differ from the number of operation cycles the wear component can perform in reality until it is fully worn out.

Preferably, the remaining number of operation cycles is a remaining number of operating cycles of the clipping machine for an operation of the clipping machine with the latest acquired operating parameters. Preferably, the remaining number of operating cycles is a remaining number of operating cycles of the clipping machine if the clipping machine is operated with the same distribution of operating parameters as during a predefined number of previous operating cycles. If, for example, the clipping machine was operated for 1.500 cycles with a clip of a first type and then for 500 operating cycles with a clip of a second type, the remaining number of operating cycles can be a remaining number of operating cycles of the clipping machine with a use ratio of clips of the first type to clips of the second type of 3 to 1. In some embodiments, the remaining number of operating cycles can be a number of operating cycles that remain for an operation of the clipping machine with standard operating parameters.

Preferably, the individual scale function applies a wear factor based on at least one operating parameter. The wear factor is directly or indirectly dependent on the operating parameter or set of operating parameters. Preferably, the wear factor is based on a parameter value of the operating parameter, in particular a normalized parameter value of the operating parameter, and on a correlation between the operating parameter and the associated wear component (i.e. the wear component for which the individual scaled wear value is determined). Preferably, the individual scale function applies the wear factor to the number of operating cycles performed, since the last update of the wear value, for determining the individual scaled wear value, in particular if the wear value is a wear counter. The correlation can be a predefined correlation. For example, the correlation can be stored in a memory of the clipping machine system. Preferably, the correlation is or comprises a multiplier. For example, the correlation can be a multiplier having the value 1.3 for the combination of the operating parameter "clip pressure" and the wear component "punch". The correlation is preferably independent of the parameter value of the operating parameter. A plurality of correlations can be stored in a memory in the form of a heat map.

In some embodiment, the system comprises at least a first wear monitoring unit associated with a first wear component of the clipping machine and a second wear monitoring unit associated with a second wear component of the clipping machine, wherein a first scaling function for determining the individual scaled wear value of the first wear monitoring unit differs from a second scaling function for determining the individual scaled wear value of the second wear monitoring unit. The wear values of the wear monitoring units associated with the wear components are then scaled individually, each dependent on the operating parameters. The operating parameters the individual scaled wear value are based on can be identical or different. For example, both the first and second individual scaling function can be based on the clip pressure, while only the first individual scaling function is further based on the viscosity of the filling material. The updated wear values for the first and second wear component can be different but must not be different from each other. It shall be understood that different scaling functions can lead to the same result dependent on the operating parameter(s).

According to a preferred further development, the second scaling function includes at least one operating parameter different from the first scaling function.

In some embodiments, the individual scaling function FSᵢ for a wear monitoring unit associated to wear component i has the following form: ${VS}_{i} = \frac{{PV}_{k = 1} \times {C}_{i , k = 1} + {PV}_{k = 2} \times {C}_{i , k = 2} + … + {PV}_{k = m} \times {C}_{i , k = m}}{m} \times Δ n$

In this formula, VSᵢ represents the individual scaled wear value of component i; PV represents the parameter value of a parameter k of a number m of parameters P; C_{i,k} represents the correlation between the parameter k and the wear component i; and Δn represents the number of operating cycles of the clipping machine since the last determination of the individual scaled wear value.

Preferably, a product PVₖ x C_{i,k} is only included with its actual result if the value of the product PVₖ x C_{i,k} exceeds a significance threshold value ST. The significance threshold preferably has a value of 1.05, preferably 1.1, preferably 1.15, preferably 1.2, preferably 1.25, preferably 1.3, preferably 1.35, preferably 1.40, preferably 1.45, and particularly preferred 1.5. By including a significance threshold, it can be prevented that the individual scaled wear value is less than a corresponding increase of the wear value for an operation of the clipping machine with standard parameters. If the condition (PVₖ x C_{i,k} < ST) is satisfied, the term (PVₖ x C_{i,k}) is preferably replaced by 1 for the respective combination of PV and correlation. The correlations can be predefined correlations, which are for example stored in a heat map.

Preferably, the clipping machine system further comprises a prediction module. The prediction module is configured to perform a prediction of a remaining time until a respective wear value of at least one wear component is predicted to exceed a corresponding wear threshold, a remaining number of operating cycles until a respective wear value of at least one wear component is predicted to exceed a corresponding wear threshold and/or a point in time in that a respective wear value of at least one wear component is predicted to exceed a corresponding wear threshold. The prediction module can be configured to receive the updated wear value for at least one wear monitoring unit. The prediction module is configured to perform a prediction based on the received updated wear value. Preferably, the prediction module is configured to perform a prediction using an individual prediction function. The individual prediction function is individual for the wear component the prediction is made for. Preferably, the prediction function is based on the updated wear value, in particular the updated wear value at the time the prediction is performed. The updated wear value can form a starting value for the prediction. The individual prediction function can be similar to the individual scaling function. For example and preferably, the function for a given operating parameter (or parameter set) and a wear component can be substantially identical for the individual scaling function and the prediction function for a specific wear component Cᵢ. Preferably, an individual prediction function for predicting a remaining number of operating cycles until the wear value of exceeds the corresponding wear threshold can take the following form: ${n}_{remaining} = \frac{{n}_{threshold} - {n}_{start}}{{VS}_{i}}$

In this formula, n_{remaining} represents the remaining number of operating cycles, nₛₜₐᵣₜ represents the starting value at the time the prediction is made and n_{threshold} represents the wear threshold in the form of a threshold number of operating cycles. VSᵢ is the individual scaling function for wear component i. The wear threshold can be a predefined threshold. For example, the wear threshold can be defined by a user. In the above shown exemplary form of the prediction function, the individual wear function is based on the operating parameters of the clipping machine at the time the prediction is made. It is however also preferred, that the prediction module is configured to base the prediction on at least one expected operating parameter or a set of operating parameters. The expected operating parameters can be based on historical operating parameters of the clipping machine. If, for example, the clipping machine has been used in the past for production of two types of products in a ratio of 3:1, then the prediction can be based on two corresponding sets of operating parameters with the assumption that the first set of operating parameters is used for 75% of the remaining operating cycles and the second set of operating parameters is used for 25% of the remaining operating cycles. The prediction module can additionally or alternatively be configured to base the prediction on a predefined operating parameter or set of operating parameters. For example, the prediction can be based on a user input of a product to be produced next and a set of operating parameters corresponding to the user input.

Preferably, the status output includes the predicted remaining time, the predicted remaining number of operating cycles and/or the predicted point in time. For example, a predicted remaining number of operating cycles can be provided to a wireless interface such that the remaining number of operating cycles can be received and displayed on a handheld device.

In some embodiments, the output module is configured to provide a predictive maintenance signal when the wear value of at least one wear component is predicted to exceed the corresponding threshold within a predefined time or number of operating cycles of the clipping machine. The predictive maintenance signal can notify a user that maintenance of the at least wear component is required soon. For example, the output module can be configured to display the predictive maintenance signal on a display of the clipping machine.

Preferably, the status output includes a current wear status of the wear component. The current wear status can be derived from the wear value. Preferably, the output module is configured to assign a wear status to the updated wear value. Preferably, a wear status can be assigned to a range of wear values. For example, a wear status "critical wear" can be assigned to an updated wear counter of less than 500 remaining operating cycles. Additionally or alternatively, the wear status can be a percentage of a lifetime of the wear component. For example the status output can include a current wear status in the form of "20% remaining lifetime".

In some embodiments, the operating parameter includes at least one user input parameter. The user input parameter is provided by a user, preferably provided to the control device via a human-machine-interface. The user input is thus an operating parameter that is directly input by a user without any further alteration by the clipping machine. For example, the user input can be a type of product to be produced, a type of clip provided to the clipping machine, a diameter or caliber respectively of products to be produced or the like. In some embodiments, the machine can be configured to determine a type of clip provided to the clipping machine, for example, via a RFID tag or the like.

According to a preferred embodiment, the control device is configured to derive at least one operating parameter from the user input parameter and to control operation of the clipping machine based on the derived operating parameter. According to the preferred embodiment, operating parameters can be user input parameters that are directly provided by a user and parameters that are derived from such user input parameters. Moreover, operating parameters can be measured parameters. Preferably, the control device is configured to derive multiple operating parameters from a single user input parameter. Preferably, the control device is configured to derive a predefined set of parameters including at least one operating parameter from a plurality of predefined parameter sets based on the user input parameter. The plurality of parameter sets are preferably pre-stored in a memory of the clipping machine system, in particular a memory of the control device. For example, a user can select a product type to be produced with the clipping machine as a user input parameter. For this product type, a "recipe" including a plurality of operating parameters such as filling viscosity, product length, product diameter, clip pressure, size of an orifice of the gathering means or the like can be predefined in a memory of the clipping machine system. The control device can be configured to derive a parameter set corresponding to the product to be produced for acquiring the operating parameters.

Preferably, the clipping machine system further comprises a memory for storing operating data. The operating data can include operating parameters. In preferred configurations of the clipping machine system, the wear scaling module is configured to determine the individual scaling function from a data set including operating parameters and wear event information.

Preferably, the at least one individual scaling function for determining an individual scaled wear value is a predefined scaling function. A predefined scaling function is preset for determining the corresponding individual scaled wear value. For example, the predefined scaling function may be a weighing function applying predefined weights to each parameter included in the respective scaling function. The scaling function and/or correlations forming part of the scaling function can be based on empirical data. In other embodiments, at least a part of a scaling function for at least one wear monitoring unit and associated wear component can be determined by an algorithm from historical operating data of the clipping machine or a plurality of similar clipping machines. Such an algorithm can be configured to find correlations between operating parameters and a lifetime and/or wear events of the wear component. A scaling function being at least partially based on such a data analyzing algorithm can be stored in the memory as an individual scaling function. In some embodiments, the clipping machine system, in particular the wear scaling module, can be configured to adapt the individual scaling function for at least one wear monitoring unit during operation of the clipping machine. The clipping machine system is preferably configured for machine learning.

Preferably, the operating parameter includes at least one of: a clip pressure, the clip pressure being a pressure applied to a closure clip during the closing operation; a cycle rate of the clipping machine; a die type; a die width; a punch type; a punch width; a trailing distance, the trailing distance being a difference of a set point value and the actual value of a rotational speed of a drive of the clipping machine; a clip hardness, the clip hardness preferably being given as a Brinell, Vickers or Rockwell hardness value or given as a relative value; a lubricating status, wherein the lubricating status may be given as a digital value differentiating between a lubricated and a non-lubricated state; a viscosity of the filling or product respectively; a torque, in particular a torque required for driving a fly wheel of the clipping machine; a displacement distance, the displacement distance characterizing a maximum distance between two displacement tools of the gathering unit during a gathering process for forming a plait-like portion; a conveyor speed of a product conveyor; a filler feed rate; a filling time required for filling a product; a temperature, in particular an environmental temperature and/or a product temperature; a gathering hole diameter, the gathering hole diameter being the diameter of an orifice of the gathering means through which the fully gathered plait-like portion extends; a gathering speed at which the gathering means reduce the product diameter to form the plait-like portion; a clip time required for applying one clip, a return time required for returning to a neutral position from a fully actuated position; a product length; a casing brake pressure of a casing brake of the clipping machine; a product caliber or product diameter respectively; a machine temperature, in particular a motor temperature of a motor of the clipping machine; a casing material; a filling tube length of a filing tube of the clipping machine, a filling pipe diameter and/or a relative humidity. The clip pressure can be provided as a relative value, for example in a range of 0 to 9, wherein 0 represents the lowest possible clip pressure of the clipping machine and 9 represents the highest possible (maximum) clip pressure of the clipping machine.

Preferably, the clipping machine system further comprises at least one sensor for acquiring sensor data, in particular sensor data indicative of a machine condition of the clipping machine. For example, a machine condition may be a vibration of the clipping machine or a part thereof, a temperature of the clipping machine or a part of the clipping machine, and/or a noise generated by the clipping machine. Preferably, the sensor is or comprises a vibration sensor, an acceleration sensor, and/or an ultrasonic sensor.

In some embodiments, the at least one wear scaling module is configured to receive the acquired sensor data and to determine the individual scaled wear value for each wear monitoring unit based on the received operating parameter and the received sensor date using the individual scaling function.

Preferably, the clipping machine system further comprises at least one state determination module configured to determine a wear state of at least one wear component associated with the state determination module based on the sensor data. The state determination module can be configured to determine the wear state of at least one wear component based on a machine learning algorithm.

According to a preferred configuration, the wear monitoring unit is configured to determine a predicted state of the associated wear component based on the wear value. The wear monitoring unit can further be configured to compare the predicted state of the wear component with the wear state determined by the state determination module. This allows a comparison of the results of an operating parameter based determination of the state of the wear component (i.e. the wear value) and the results of a sensor based determination of the state of the wear component (i.e. the wear state). Preferably, the status output represents both the wear state and the wear value. For example, comparison of the predicted state with the wear state can be used to verify the respective results and can help to prevent "false alarms".

Preferably, the clipping machine system further comprises a log module configured to log operating parameters, wear values and/or status outputs. The log module can be configured to log the operating parameters, wear values and/or status output with a corresponding time stamp and/or cycle number of a cycle of the clipping machine at which the respective operating parameter, wear value or status output was determined. The log module can be configured to store the logged operating parameters, wear values and/or status outputs in a memory of the clipping machine system, preferably a memory of the control device. Preferably, the log module is configured to log at least the operating parameters for each operating cycle of the clipping machine.

In some embodiments, the log module is configured to store at least a wear incident of a wear component and/or a time or number of operating cycles at which the wear incident occurred. The wear incident is an incident at which a failure of the wear component occurs. Preferably, the log module is further configured to store the wear incident with a corresponding time stamp, a number of operating cycles performed by the machine at the time the wear incident occurred and/or the individual scaled wear value at the time the wear incident occurred.

Preferably, the clipping machine system further comprises a data transfer module and/or interface configured to transfer data stored on the log module to an external device.

Preferably, the wear component is one of a belt, in particular toothed belt, of a tool drive of the clipping machine; a lever of a tool actuator of the clipping machine; a bushing, in particular a bushing of a clip lever; a guide groove, in particular a guide groove of a drive wheel of the clipping machine; a bearing, a casing, a sealing element, a displacer plate of a gathering means of the clipping machine; a pneumatic cylinder, in particular a pneumatic cylinder of a cutting device for severing the plait-like portion; a blade of a cutting device; a spring, in particular a leaf spring; a punch; a die; a valve, in particular a pneumatic valve; and/or a brake ring of a casing brake.

Preferably, the determination of the individual scaled wear value of a wear monitoring unit associated with the punch is based on at least one of the parameters: cycle rate; trailing distance; clip pressure; clip hardness; clip height, clip type; torque. Preferably, the determination of the individual scaled wear value of a wear monitoring unit associated with a displacer plate is based on at least one, preferably a plurality, of the parameters: cycle rate; trailing distance; filling viscosity; gathering hole diameter; casing material.

In an alternative first aspect, the invention solves the above-mentioned problem with a clipping machine for producing sausage-shaped products, the clipping machine comprising a plurality of wear components and at least one control device, wherein the control device is configured to control the clipping machine to perform one or more operating cycles and to acquire operating parameters of the clipping machine, wherein the control device is further configured to monitor a wear cycle count for at least one of the wear components, to determine an individual wear cycle count for the wear component based on at least one operating parameter using an individual scaling function and to update the wear cycle count for the wear component with the respective determined individual wear cycle count. Preferably, the control device is configured to determine the individual wear cycle count based on at least one operating parameter intensity of the operating parameter, a correlation between the operating parameter and the wear component and a number of operating parameters performed by the clipping machine with the respective parameter. The correlation can be a predefined correlation. Preferably, a plurality of correlations for combinations of parameters and wear components are pre-stored in a memory of the control device. The control device can be configured to provide a status output for at least one wear component at an interface based on the updated wear cycle count of the wear component. It shall be understood that the clipping machine of the alternative first aspect of the invention can have similar aspects and preferred configurations to the ones described above with respect to the clipping machine system. Therefore reference is made to the above description of the clipping machine system according to the first aspect of the invention.

Preferably, the individual wear cycle count determined by the control device equals the number of operating parameters performed by the clipping machine, if the individual wear cycle count determined using the individual scaling function lies below a predefined threshold value and/or the individual wear cycle count determined using the individual scaling function is smaller than the number of operating cycles performed by the clipping machine with the respective operating parameter determination of the individual wear cycle count is based on.

According to a second aspect, the invention solves the above-mentioned problem with a method for operating a clipping machine system as defined in independent claim 14. In particular, the invention solves the above-mentioned problem with a method for operating a clipping machine system for producing sausage-shaped products, in particular a clipping machine system according to any of the preferred embodiment of the first aspect of the invention described above, the method comprising the steps of: acquiring at least one operating parameter of the clipping machine; determining a starting wear value for at least one wear component of the clipping machine; operating the clipping machine with the provided operating parameter to perform at least one operating cycle; determine an individual scaled wear value for the wear component based on the operating parameter using an individual scaling function, updating the wear value for the wear component with the individual scaled wear value.

The starting wear value of the at least one wear component is a wear value of the clipping machine at the start of operation of the clipping machine. For example and preferably, the starting wear value can be an updated wear value after the last operating cycle performed by the clipping machine in a previous operation. Operation of the clipping machine is preferably controlled by a control device of the clipping machine based on the acquired operating parameters. The operating parameters can comprise user input parameters and/or operating parameters determined by the control device, in particular determined by the control device based on at least one user input parameter. A wear scaling module can be provided for determination of the individual scaled wear value. A wear monitoring unit for monitoring the wear value can be provided. The wear value can be a wear counter as defined for the first aspect of the invention.

It shall be understood that the method for operating a clipping machine system according to the second aspect of the invention and the clipping machine system according to the first aspect of the invention comprise similar and identical embodiments which are in particular described in the dependent claims to independent claim 1. In so far, reference is made to the above description of the clipping machine system according to the first aspect of the invention.

According to a first preferred embodiment, the method further comprises the step: providing a status output for the wear component at an interface based on the updated wear value. The wear status preferably comprises a wear counter.

Preferably the method further comprises the steps of: determining a wear threshold value for the wear component; and comparing the updated wear value with the wear threshold value. The wear threshold value can be determined from a user input. The wear threshold value can additionally or alternatively be a predefined wear threshold that is preferably stored in a memory of the clipping machine, in particular a memory of a control device of the clipping machine. If the wear value is a wear counter, then the wear threshold value preferably is a threshold number of operating cycles. The wear threshold can have the value 0. In some embodiments, the wear threshold value is defined as a fraction or percentage of the starting wear value and/or a wear value at the beginning of the lifetime of the corresponding wear component.

Preferably, the method further comprises the step of: providing a wear signal if the updated wear value equals or exceeds the wear threshold value. In the context of the present disclosure, a threshold value can be exceeded if a rising wear value becomes larger than the corresponding threshold value or if a falling wear value falls below the threshold value. For example, a wear counter can increase with every cycle performed by the clipping machine such that at some point the wear counter reaches and then becomes larger than a corresponding threshold wear count. Alternatively the wear counter can be a falling wear counter representing a remaining number of wear cycles that is counted down with every operating cycle. Such a falling wear counter reaches the threshold value from above and then exceeds it by falling below the threshold value. The wear signal can be an electronic signal, an acoustic signal, an optical signal or the like. For example, a wear signal can be sent wirelessly to a handheld device, a remote control device, a cloud server or the like.

In some embodiments, the method further comprises at least one of the steps: predicting a remaining time until the updated wear value equals or exceeds the wear threshold value; predicting a remaining number of operating cycles of the clipping machine until the updated wear value equals or exceeds the wear threshold value; and/or predicting a point in time until the updated wear value equals or exceeds the wear threshold value. The prediction can be made using an individual prediction function corresponding to wear value of the respective wear component. As described above with reference to the clipping machine system, the prediction can be based on the most recent operating parameter or set of operating parameters respectively at the time the prediction is made, on historical operating parameters and/or on operating parameter predefined for the future operation of the clipping machine system.

Preferably, the method further comprises the step: acquiring sensor data representing a machine condition during the operation of the clipping machine. The method can further comprise the step: determining a wear condition of at least one wear component of the clipping machine based on the sensor data. Additionally, the method can comprise the step: providing a maintenance signal, providing a warning signal and/or stopping operation of the clipping machine, if the determination of the wear condition of the wear component shows that the wear component is worn out. Additionally or alternatively, the method can comprise the step: providing a predictive maintenance signal, in particular if the determined wear condition fulfills a threshold condition. For example, a predictive maintenance signal can be provided if the wear condition shows that a remaining life time of the wear component is less than 4 weeks and/or less than 5.000 cycles of the clipping machine.

In some embodiments, the method further comprises the step: logging the at least one operating parameter, preferably for each operating cycle, in a log module. The logged operating parameters may be linked to the operating cycle that was performed with these operating parameters. Preferably, the operating parameters are logged with a time stamp. The logged operating parameters can be stored in a memory, preferably a memory of a control device of a clipping machine of the clipping machine system. Memories specified in the present disclosure can be any type of memory such as a RAM, ROM, flash memory, HDD, SSD, a cloud memory or the like.

In a preferred further development, the method further comprises the step: logging a wear incident of the wear component. Preferably, a logged wear incident is linked to the respective operating cycle and/or time it occurred. Preferably, the method further comprises the step: updating the individual scaling function based on the logged wear incident and logged operating parameter. In particular, the method can comprise the step of determining correlations between one or more operating parameters and wear of a wear component based on a data set including operating parameters and wear incidents of one or more machines, in particular clipping machines. The step can be performed using a big data analysis algorithm, a machine learning algorithm or using conventional data analysis methods.

In preferred embodiments, the method further comprises the steps: determining a second starting wear value for a second wear component of the clipping machine; determine a second individual scaled wear value for the second wear component based on the operating parameter using a second individual scaling function different to the first scaling function, updating the wear value for the second wear component with the second individual scaled wear value.

According to a third aspect, the invention solves the above-mentioned problem with a computer program product comprising code means configured to execute the method of any of the preferred embodiments of the method according to the second aspect of the invention when executed on a clipping machine system, in particular on a control device of the clipping machine system.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth.

In the accompanying drawings
- Fig. 1: shows a schematic view of an exemplary clipping machine for producing sausage-shaped products;
- Fig. 2: illustrates a clipping machine system comprising a clipping machine;
- Fig. 3: shows an exemplary heat map of correlations between operating parameters and the wear on wear components;
- Fig. 4: shows a section of an example of a clipping device of the clipping machine; and
- Fig. 5: shows a block diagram illustrating a method for operating a clipping machine.

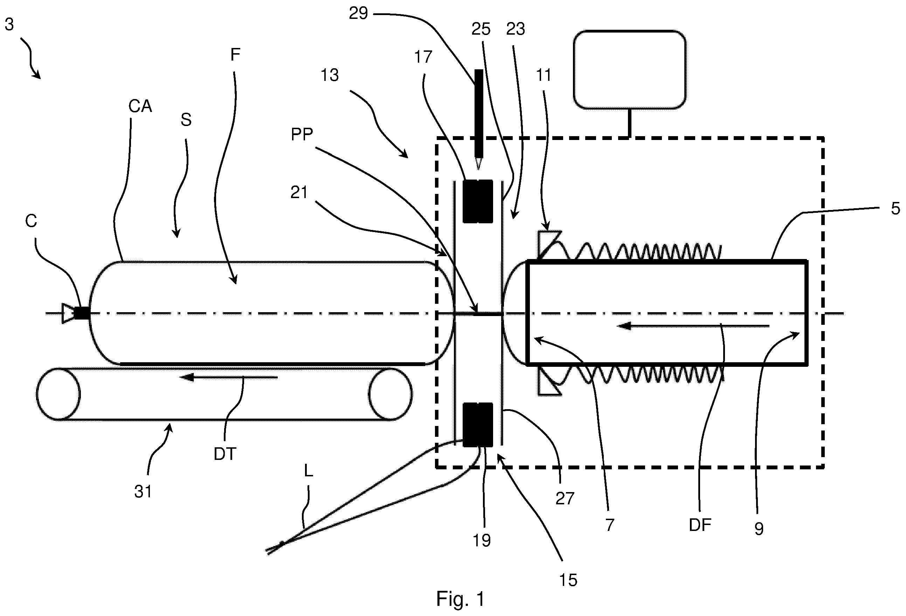

A clipping machine 3 for producing sausage-shaped products S, like sausages, which contain a flowable filling material F in a tubular or bag-shaped packaging casing CA, is shown schematically in Fig. 1, in particular its closing region. The clipping machine 3 is part of a clipping machine system 1. The clipping machine 3 comprises a filling tube 5 having a longitudinally and horizontally extending central axis A, with a discharge opening 7 for discharging the filling material F at its left end into the casing CA. Filling material F is provided to the filling tube 5 from a filler (not shown) through a feed opening 9. The filler does not necessarily form part of the clipping machine system 1. The filler provides the filling material F under pressure such that the filling material F is pushed in a feeding direction DF from the feed opening 9 to the discharge opening 7 and out of the filling tube 5. The casing CA is provided on the filling tube 5. A casing brake assembly 11 is arranged on and coaxially aligned with filling tube 5 near the discharge opening 7 of the filling tube 5. Filling tube 5 is made of a suitable material, like stainless steel or the like.

A supply of tubular packaging casing CA made of a thin material is stored on filling tube 5 in a shirred manner like a concertina. From the supply of tubular packaging casing CA, tubular packaging casing CA is pulled-off during the filling process. In particular, the feeding pressure of the filling material F that is filled in the casing CA to form the sausage-shaped product S pulls the packaging casing CA from the filling tube 5. A first end of the sausage-shaped product S is closed by a closure clip such that the filling material F is contained in the packaging casing CA. The casing brake assembly 11 provides a braking force onto tubular packaging casing CA being pulled off from the filling tube 10. The braking force provided by the casing brake assembly 11 is adjustable in order to control the amount of packaging casing CA pulled off of the filling tube 10. Usually, the casing brake assembly 11 is controlled such that the casing CA is full of filling material F. However, in some cases some slack can remain in the casing CA, for example, if a square shape is to be provided to the sausage-shaped products S later.

Clipping machine 3 further comprises a clipping device 13 for closing a filled portion of tubular packaging casing CA by applying closure means, like closure clips C, to a plait-like portion PP. For forming the plait-like portion, the clipping machine 3 further comprises gathering means 15. The gathering means 15 are configured to engage the filled packaging and to displace the filling material F from a section of the filled casing CA to form a portion of casing CA that is substantially free from filling material F.

The clipping device 13 and the gathering means 15 are arranged downstream of the filling tube 10 with respect to the feeding direction DF. As can be inferred from Fig. 1, the clipping device 13 is positioned immediately downstream of the discharge opening 7 of the filling tube 5. In the embodiment shown in Fig. 1, the clipping device 13 comprises a first and a second clipping tool 17, 19 or a punch 17 and a die 19 respectively. It has to be noted that punch 17 and die 19 may apply and close a single closure clip for closing just filled tubular packaging casing CA, or can be configured to apply and close two closure clips C at the same time, a first closure clip for closing the rear end of just filled tubular packaging casing CA for forming a sausage-shaped product S, and a second closure clip for closing the front end of a tubular packaging casing CA subsequently to be filled. Instead of one punch 17 and one die 19 configured to apply multiple closure clips at the same time, the clipping device 13 can also comprise multiple punches 17 and/or multiple dies 19.

Gathering means 15 include a first displacer unit 21 and a second displacer unit 23, wherein first displacer unit 21 is positioned downstream second displacer unit 23. First and second clipping tools 17, 29 of clipping device 12 may be positioned between first and second displacer units 21, 23, at least for applying and closing one or two closure clips C to plait-like portion PP. At least one of the displacer units 21, 23 is reversibly movable parallel to feeding direction DF of the filling material, for forming a plait-like portion PP of desired length. Preferably, the first displacer unit 21 is movable while the second displacer unit 23 is stationary with regard to its position in the feeding direction DF. In the preferred embodiment, each of the displacer units 21, 23 comprises two gathering plates 25, 27 extending substantially transverse to the feeding direction DF. Here the gathering plates 25, 27 are an upper gathering plate 25 and a lower gathering plate 27. The gathering plates 25, 27 have a V-shaped gathering contour. The v-shaped gathering contour of each gathering plates 25, 27 opens towards the filled packaging casing C. The gathering plates 25, 27 of the displacer units 21, 23 can be advanced towards each other such that a gathering orifice or gathering hole defined by the overlapping v-shaped gathering contours of the gathering plates 25, 27 can be decreased gradually. In this way, the gathering plates 25, 27 constrict the filled packaging casing CA extending through the gathering hole and displace the filling material from the casing CA. After a minimal gathering hole diameter has been reached, the first displacer unit 23 is moved laterally along the feeding direction DF to form the plait-like portion PP.

If it is intended to store sausage-shaped products S on a rod-like element, like a smoking rod, e.g. for further processing like cooking or smoking, a suspension element L, like a suspension loop, may be provided and attached to one end of each of the sausage-shaped products S, or at one end of a chain of sausage-shaped products. The suspension element L may be fed to one of the closing tools 17, 19 and may be fixed to the respective end of sausage-shaped product S by means of the closure clip that closes said end of the sausage-shaped product S.

For separating sausage-shaped product S just produced from the remaining supply of tubular packaging casing CA stored on filling tube 5, a cutting device 29 may be provided. Said cutting device 29 includes a blade that cuts the tubular packaging casing CA upstream of the closure clip that closes the just filled portion of tubular packaging casing CA. If two closure clips have been applied to plait-like portion P by clipping device 13, cutting device 29 preferably cuts the plait-like portion PP between the two closure clips. The blade of the cutting device 29 may be reversibly movable from a retracted position to a cutting position by a blade drive (not shown), in particular a pneumatic drive.

For discharging a sausage-shaped product S just produced from the clipping machine 3 in a transportation direction DT, a discharge device 31 is arranged downstream clipping device 13. The transportation direction DT can be substantially the same as the feeding direction DF. The discharge device 31 can comprise a conveyor having a variable speed drive. For storing sausage-shaped products S on a rod-like element, like a smoking rod, a hanging system can be provided that catches the suspension element L with a catching device (not shown), like a catching needle. The catching device can then guide the suspension element L towards the rod-like element.

An operating cycle of the clipping machine 3 includes at least the filling process of the packaging casing CA with filling material F, the subsequent formation of a plait-like portion PP by the gathering means 15 and the application of at least one closure clip to the plait-like portion PP. The operating cycle further includes a return of all components of the clipping machine 3 that were part of these steps to their starting position. For example, the first displacer unit 21 can move towards the second displacer unit 23 and its gathering plates can move away from each other to open the gathering hole such that a new filled portion of the packaging casing CA can extend there through. The operating cycle of the clipping machine 3 can further comprise the cutting step, in which the cutting device 29 severs the plait-like portion PP. However, in case chains of sausages are produced, not every operating cycle of the clipping machine 3 includes such a cutting step. For example, the cutting operation can be performed only every fifth operating cycle of the clipping machine 3 if a sausage chain include five sausages is produced by the clipping machine 3.

The clipping machine 3 further comprises a control device 33 for controlling an operation of the clipping machine 3. For example, the control device 33 can be configured to control drive devices of the clipping machine 3 that are provided for driving the clipping device 13, the gathering means 15, the cutting device 29 and/or the discharge device 31 and/or other components of the clipping machine 3 such as the casing brake assembly 11.

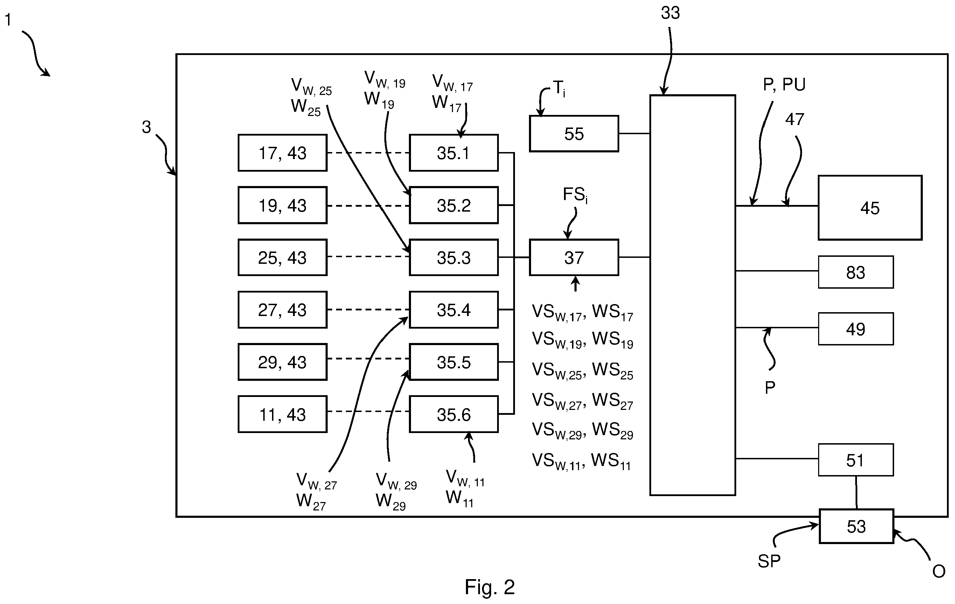

Fig. 2 schematically shows the clipping machine system 1. The clipping machine system 1 comprises the clipping machine 3, a control device 33 configured to control an operation of the clipping machine 3, a plurality of wear monitoring units 35, a wear scaling module 37, an output module 39 and an interface 41. In the embodiment illustrated in Fig. 2, the wear monitoring units 35, the wear scaling module 37 and the output module 39 are all shown as separate units for illustrative purposes. At least one of the wear monitoring units 35, the wear scaling module 37 and/or the output module 39 can also be formed as a subunit of the control device 33, in particular a virtual subunit of the control device 33.

As shown in Fig. 2, the clipping machine 3 comprises a plurality of wear components 43. In the embodiment of Fig. 2, the punch 17, the die 19, the upper and lower gathering plates 25, 27, the casing brake 11 and the cutting device 29 are examples of wear components 43. During operation of the clipping machine 3, in particular when the clipping machine 3 performs the above-described operating cycles, these wear components 43 are subject to wear. For example, a contact surface of the punch 17 that contacts closure clips C that are deformed around a plait-like portion can slowly wear down due to friction between the punch 17 and the closure clips C and/or a crack can form in the punch 17 due to excess strains on the punch 17 during the closing process.

If the wear components 43 are of the intended quality, they have a certain lifetime. The lifetime can be defined as a certain number of operating cycles of the clipping machine 3 that can be performed with the respective wear component 43. For example, the punch 17 can have a lifetime of about 10.000 cycles. For other wear components 43, the lifetime can be defined by a certain number of operating hours of the clipping machine 3 and/or by a specific time. For example, some sealing elements can get brittle after a certain time irrespective of the number of cycles performed by the clipping machine 3.

The lifetime of a wear component 43 usually depends on the conditions to which the respective wear component 43 is exposed. For example, the lifetime of the punch 17 may be reduced significantly if closure clips C made from a very hard material are used. A lifetime of a sealing element can be reduced significantly, if the sealing element is regularly exposed to aggressive cleaning media or if a pressure washer is directed on the sealing element during a cleaning process. In clipping machines 3 the lifetime of wear components 43 can differ significantly. Moreover, dependent on the conditions a wear component 43 experiences, the lifetime for two wear components 43 of the same can also vary. For example, the punch 17 can have a lifetime of 10.000 cycles for closure clips C having a high clip hardness and a lifetime of 15.000 cycles for closure clips C made from a relatively soft material.

The wear monitoring units 35 of the preferred embodiment of the inventive clipping tool system 1 allow monitoring of a wear value V_{W} of the wear components 43. Preferably, a wear monitoring unit 35 is provided for each wear component 43. In the embodiment illustrated in Fig. 2, a first wear monitoring unit 35.1 is provided for monitoring a wear value of the punch 17, a second wear monitoring unit 35.2 is provided for monitoring a wear value of the die 19 and so on. In Fig. 2, a monitoring unit 35 and a respective wear component 43 it is associated to are linked by dashed lines. The wear value V_{W} of a wear component changes when the respective wear component 43 is used and/or over time. The amount by which the corresponding wear value V_{W} changes depends on the conditions the wear component 43 experiences, in particular during use of the clipping machine 1.

Operating parameters P that define a specific operation of the clipping machine 3 have a strong influence on the conditions experienced by the wear components 43. The inventors have found that wear of the wear components 43 can be monitored very accurately based on the operating parameters P.

The operating parameters P can be provided by a user of the clipping machine 3 via an input device, such as a control panel 45 of the clipping machine 3. Operating parameters P that are directly provided by a user are also referred to as user input parameters PU. Such user input parameters PU can be very specific. For example, a clip pressure which is defined as a maximum pressure applied to a closure clip during the closing process can be specified by a user as a user input parameter PU. In other configurations, the user input parameter PC can be rather general. For example, a user can only define the type of sausage-shaped product S to be produced as a user input parameter PU.

The control device 33 is configured to acquire operating parameters P. In the present embodiment the control device 33 is configured to acquire the user input parameters PU from the control panel 45, to which it is connected via a suitable connection such as a data cable 47. The control device 33 is further configured to acquire additional operating parameters P. Preferably, additional operating parameters P that are associated with a specific user input parameter PU are pre-stored in a memory 49 of the control device 33. The control device 33 can then acquire these operating parameters P from the memory 49. If, for example, the user input parameter PU specifies a specific product type, a "recipe" corresponding to this product type can be stored in the memory 49. This recipe can comprise operating parameters P such as a casing material, product length, clip type, filling viscosity, gathering hole diameter and the like. The control device 33 can acquire these operating parameters P. Preferably, the control device 33 is configured to determine operating parameters from sensor data and/or signals. In particular, the control device 33 can be configured to determine one or more operating parameters P from external signals such as signals provided from a machine connected to the clipping machine 3, and/or from internal signals, such as rotational speed signals, current signals or the like of a drive device.

In the preferred embodiment, the control device 33 controls operation of the clipping machine 3 based on at least some the operating parameters P. For example, the control device 33 controls one or more drive devices of the gathering means 13 such that the gathering plates 25, 27 form a gathering hole according to the respective operating parameter P. During operation, the control device 33 can acquire additional operating parameters P, such as a power consumption and/or motor current of at least one electric motor of the clipping machine 1.

The wear monitoring units 35 of the preferred embodiment of the inventive clipping tool system 1 are configured for monitoring of a wear value V_{W} of the associated wear component 43. If the wear component 43 is unused, the wear value V_{W} can be a predefined wear value provided as a user input or predefined for a specific wear component 43. In particular when the clipping machine 3 is operated to perform one or more production cycles, the wear components 43 are worn out. As described above, a degree of wear of different wear components 43 for the same operating parameters P can vary. Moreover, the degree of wear for the same wear component 43 varies with the operating parameters P.

The wear scaling module 37 is configured to provide an individual scaled wear value VS_{W, i} for each wear monitoring unit 35 and to update the wear value V_{W,i} of each wear monitoring unit 35 with the respective individual scaled wear value VS_{W,i}. In the present embodiment, the wear scaling module 37, for example, determines an individual scaled wear value VS_{w,17} for the punch 17 and updates the wear value V_{W, 17} of the first wear monitoring unit 35.1 with this individual scaled wear value VS_{W}, ₁₇.

The wear scaling module 37 bases the determination of the individual scaled wear value V_{W,i} of a respective wear monitoring unit 35 on at least one of the operating parameters P acquired by the control device 33. For receiving the acquired operating parameters P, the wear scaling module 37 is connected to the control device 33. For determining the individual scaled wear value V_{W,i} of a respective wear monitoring unit 35, the wear scaling module 37 uses an individual scaling function FSᵢ that is individual for each wear monitoring unit 35 or associated wear component 43 respectively.

In the preferred embodiment, the wear value V_{W,i} is a wear counter Wᵢ that represents a number of standard operating cycles performed by the clipping machine 3. A standard operating cycle is representative of an operating cycle of the clipping machine 3 that is performed with a predefined set of standard operating parameters. Providing a wear counter Wᵢ allows to compare the wear value of different wear components 43 and/or the effect of different operating parameters P on wear component 43. Maintenance can be scheduled more precisely. Moreover, exchange of wear components 43 that have not yet reached the end of their lifetime can be prevented. The risk of downtimes resulting from unexpected failure of a wear component 43 can be reduced. Operating and/or maintenance cost of the clipping machine 3 can be reduced.

As the clipping machine 3 is usually not operated with the standard operating parameters P, the wear counter W (or virtual number of standard operating cycles performed by the clipping machine 3) does not match the actual number of operating cycles performed by the clipping machine 3. In the exemplary embodiment, the wear scaling module 37 translates the actual wear of a wear component 43 into standard operating cycles by determining the individually scaled wear value VS_{W,i} using the individual scaling function FSᵢ.

Preferably, the individual scaling functions FSᵢ includes correlations between at least one of the operating parameters P and the wear of a wear component 43. These correlations can be found empirically, by suitable algorithms or the like. The individual scaling functions FSᵢ can be predefined for each wear monitoring unit 35. Preferably, the clipping machine system 1, in particular a control device 33 of the clipping machine 3 or a server of the system 1, is configured to update the individual scaling functions FSᵢ based on historical data. For example and preferably, the system 1 can be configured to adapt at least one individual scaling function FSᵢ based on a machine learning algorithm.

In the present embodiment, the structure of the individual scaling function FSᵢ for each of the wear monitoring units 35 is predefined. For example, the individual scaling functions FSᵢ can be stored in the memory 49. The individual scaling functions FSᵢ for the wear monitoring units 35 are different from each other. For example, the individual scaling functions FSᵢ can differ from each other in the operating parameters Pᵢ included in the scaling functions FSᵢ and/or by a weight each operating parameter Pᵢ has compared to other operating parameters Pᵢ. This weight can be represented by a weight factor or the like in the individual scaling function FSᵢ. In the present embodiment, the individual scaling function FS₁₇ of the wear scaling module 37 for the first wear monitoring unit 35.1 associated with the punch 17 is based on the operating parameters P: clip pressure, cycle rate and trailing distance. The trailing distance is difference between a set value and an actual value of a drive of the clipping machine 3 during operation of the clipping machine. The trailing distance usually correlates with the load on the respective drive. In the present embodiment, the individual scaling function FS₁₇ for determining an individual scaled wear counter WS₁₇ for the first wear monitoring unit 35.1 associated with the punch 17 has the following form: ${FS}_{17} : {WS}_{17} = \frac{{PV}_{clip pres .} {c}_{17 , clip pres .} + {PV}_{cycle r .} {c}_{17 , cycle r .} + {PV}_{trailing dist .} {c}_{17 , trailing dist .}}{3} \times Δ n$

Here, PVᵢ characterizes the normalized parameter value of the respective operating parameters P "clip pressure", "cycle rate" and "trailing distance". C_{17,i} is a correlation between the wear component "punch" and the operating parameter Pᵢ. The term Δn represents the number of operating cycles n performed since the last update of the wear counter W₁₇. The individual scaling function FS₁₇ for determining an individual scaled wear counter WS₁₇ for the first wear monitoring unit 35.1 associated with the punch 17 therefore is a function of the operating parameters P and the number of operating cycles n performed by the clipping machine 3.

If, for example, the clipping machine 3 is operated with a high clip pressure, a high cycle rate and a large trailing distance, the function, which takes into account the parameter values PV of the operating parameters P and the correlations c, can have a value greater one. The results is that the individual scaled wear counter WS₁₇ for the first wear monitoring unit 35.1 associated with the punch 17 increases by more than one cycle for every cycle the clipping machine 3 actually performs with these operating parameters P. For example, if the clipping machine 3 performs 500 operating cycles under the harsh conditions specified by the operating parameters P, the individual scaled wear counter WS₁₇ can have a value of 650 cycles.

The wear scaling module 37 is configured to update the wear value V_{w} of each wear monitoring unit 35 with the respective determined individual scaled wear value WSᵢ. For example, the wear scaling module 37 can update the wear counter W₁₇ of the first wear monitoring unit 35.1 associated with the punch 17 with the individually scaled wear counter WS₁₇. In the present embodiment, the wear scaling module 37 updates the wear value V_{W, 17} or wear counter W₁₇ of the first wear monitoring unit 35.1 by adding the individually scaled wear counter WS₁₇ to a starting wear counter at the beginning of the operation of the clipping machine 3 with the operating parameters P. If, for example, the wear counter W₁₇ of the punch 17 had a starting value of 2.000 operating cycles, then the wear scaling module 37 can update the wear counter W₁₇ by adding the individually scaled wear counter WS₁₇ determined using the individual scaling function for the punch 17 (or the first wear monitoring unit 35.1 respectively) to this starting value. In the above example, the wear counter W₁₇ is then increased from 2.000 operating cycles to 2.650 operating cycles even though the clipping machine 3 has performed at total of 2.500 operating cycles. In other embodiments, the individual scaled wear counter W₁₇ could also be subtracted from a starting value representing a remaining lifetime or remaining number of operating cycles of the punch 17 respectively. It shall be noted that the wear counter must not be based on operating cycles.

For a different set of parameters P, the individual scaled wear value VS_{W, 17} of the first wear monitoring unit 35.1 of the punch 17 can have a different value. In some embodiments, for example if the clipping machine 3 is operated with a relatively low clip pressure, a soft clip, at a relatively low cycle rate and a with a high trailing distance, the function of the operating parameters f can have a value smaller one such that the individual scaled wear counter WS₁₇ for the punch 17 represents a number of operating cycles that is smaller than the actual number of operating cycles performed by the clipping machine 3 with these operating parameters P. For the example starting wear counter W₁₇ of 2.000 operating cycles, an operation of the clipping machine 3 for 500 cycles with the operating parameters P that result in a relatively low load on the punch could lead to an individual scaled wear counter WS₁₇ of only 350 cycles such that the updated wear counter W₁₇ has a value of 2.350 cycles. However, more preferably, the individual scaled wear counter is always larger or equal to the number of operating cycles performed by the clipping machine 3. The wear scaling module 37 can preferably configured to update the wear counter Wᵢ of a wear monitoring unit 35 associated with a wear component I by the number of operating cycles performed by the clipping machine 3 since the last update of the wear counter Wᵢ, in case the individual scaled wear counter WSᵢ is smaller than the number of operating cycles.

The operating parameters P that lead to a relatively low load on the punch 17 can lead to a relatively high load for a different component, such as the lower gathering plate 27 of the first displacer unit 21. For example, the product diameter can have an effect on the wear of the lower gathering plate 27 that is much more significant than its effect on the wear of the punch 17. This more significant effect can be represented by the individual scaling function FS₂₇ of the fourth wear monitoring unit 35.4 provided for monitoring the wear value V_{W,27} of the lower gathering plate 27. For example, a wear counter W₂₇ of the lower gathering plate 27 forming the respective wear value V_{W,27} of the lower gathering plate 27 can be increased by an individual scaled wear value WS₂₇ of 400 cycles while the corresponding wear value W₁₇ of the punch 17 is only increased by 300 cycles if the clipping machine 3 performs 300 operating cycles.

In the present embodiment, the wear counter Wᵢ represents a number of (standard) operating cycles performed with the associated wear component 43. The wear scaling module 37 increases the wear value V_{W} or wear counter Wᵢ respectively. In other embodiments, the wear counter Wᵢ or any other kind of wear value V_{W} can also count down from a starting value.

The inventive clipping machine system 1 allows to individually monitor wear of each wear component 43 for which a wear monitoring unit 35 is provided. The varying effects of the same operating parameters on different wear components 43 and the effects of variations of the same operating parameters on each wear component 43 can be taken into account. A wear of the monitored wear components 43 can be monitored reliably without the need to provide additional measuring equipment. As explained later, the clipping machine system 1 can still comprise one or more sensors, in particular wear monitoring sensors.

The clipping machine system 1 further comprises an output module 51. The output module 51 is configured to provide a status output O to an interface 53. In the present embodiment and preferably, the interface 53 is a wireless interface that is configured to wirelessly transmit the status output O to a receiving device, such as a handheld device, a cloud, a server, a computer or the like. In other embodiments, the interface 53 can be a socket that enables a cable connection or a display. The status output O provided by the output module 51 is based on the wear value V_{W,i} of at least one wear monitoring unit 35. Preferably, the status output O is based on the wear value V_{w,i} of each wear monitoring unit 35 of the clipping machine system 1. For example, the output module 51 can provide data representing the updated wear counters Wᵢ of all wear monitoring units 35 to a computer.

Preferably, the clipping machine system 1 further comprises a prediction module 55. In the present embodiment of the clipping machine system 1, the prediction module 55 is configured to predict a remaining number of operating cycles until a respective wear value V_{w,i} of at least one wear component 43 exceeds a corresponding wear threshold Tᵢ. In particular, the prediction module 55 is configured to predict the number of operating cycles of the clipping machine 3 until the wear counter Wᵢ of each wear monitoring unit 35 associated with wear components 43 reaches a corresponding threshold number of operating cycles. For example, the prediction module 55 can predict when the updated wear value V_{W,17} of the first wear monitoring unit 35.1 for monitoring wear of the punch 17 reaches an exemplary threshold number of operating cycles of 15.000.

The prediction module 55 is preferably configured to use a prediction function. For example, the prediction module 55 can subtract the updated wear counter Wᵢ at the time the prediction is made from the threshold value of operating cycles. The prediction then specifies the remaining number of operating cycles of the clipping machine 3 with standard operating parameters P. In other embodiments, the prediction module 55 can be configured to base the prediction on historical operating parameters P and or on operating parameters P specified for the future operation of the clipping machine 3.

Historical operating parameters can, for example, show that the machine was used with demanding operating parameters P for the punch 17 (e.g. high clip pressure) for half of all operating cycles performed by the clipping machine 3 and under standard operating parameters P (e.g. normal clip pressure) for the other half of all operating cycles. The demanding operating parameters P can, for example, result in an individual scaling function FS₁₇ for the first wear monitoring unit 35.1 associated with the punch 17 that multiplies the actual number of operating cycles performed by the clipping machine 3 by 1.5. The updated wear counter W₁₇ is then increased by 1.3 for each operating cycle of the clipping machine 3. Under the standard operating conditions the wear counter W₁₇ matches the number of operating cycles performed by the clipping machine 3. The prediction module 55 can base the prediction of the remaining number of operating cycles on the historical operating parameters P or the assumption, that the clipping machine 3 will be operated with the same distribution of operating parameters P in the future. For an exemplary starting wear counter W₁₇ of the punch 17 of 9.000 and a wear counter threshold T₁₇ for the punch 17 of 10.000, the prediction module 55 can then predict a remaining number of operating cycles n_{R}= 800 instead of 1.000 cycles. A corresponding exemplary prediction function can have the following form: ${n}_{R} = \left({T}_{17}-{W}_{17}\right) / \left(1\times 50%+1.5\times 50%\right) = \left(10.000-9.000\right) / 1.25 = 800$

In other embodiments, the operating parameters P for the future use may already be known at the time the prediction module 55 makes the prediction. The prediction module 55 can then use a prediction function that is similar to the individual scaling function for this predefined parameter set.

The clipping machine system 1 of the present embodiment is further configured to provide a predictive maintenance signal SP when it determines that the updated wear counter Wᵢ for at least one wear component 43 reaches the threshold Tᵢ within a predefined number of operating cycles. The determination can be based on the prediction of the prediction module 55. The predefined number of operating cycles can be zero. In the present embodiments, the predefined number of operating cycles has a value of 800. In the above example, the prediction thus shows that the updated wear counter W₁₇ of the first monitoring unit 35.1 associated with the punch 17 will reach the threshold value T₁₇ of 10.000 cycles within the predefined number of operating cycles of 800. The clipping machine system 1 then provides the predictive maintenance signal SP. In particular, the clipping machine system 1 wirelessly transmits the predictive maintenance signal SP, for example to a service technician or an operator of the clipping machine 3, via the output module 51 and the wireless interface 53.

The clipping machine system 1 further comprises a log module 57. The log module 57 is configured to log operating parameters P, wear values V_{w,i} and/or status outputs O. In the present embodiment, the log module 57 is configured to log the set of operating parameters P for each wear cycle performed by the clipping machine 3. The log module 57 is configured to provide a time stamp to the logged operating parameters P. Moreover, the log module 57 is configured to store wear incidents of the wear components 43. For example, the log module 57 can store a number of operating cycles and the operating parameters corresponding to these operating cycles after which a wear component 43 such as the punch 17 is completely worn and has to be replaced. The log module 57 can store data representing the number of operating cycles, the operating parameters P and the wear incident in a memory, for example the memory 49 of the control device 33. Preferably, the clipping machine system 1 is configured to transmit the logged data to an external device via the output module 51 and the interface 53.

The logged data can be used in a machine learning algorithm to find correlations between operating parameters P and wear of one or more wear components 43. The correlations can be used as parameters in the individual scaling functions FSᵢ, for defining individual scaling functions FSᵢ and/or for improving and/or adapting individual scaling functions FSᵢ. Correlations of operating parameters P and wear of wear components 43 can also be found empirically.

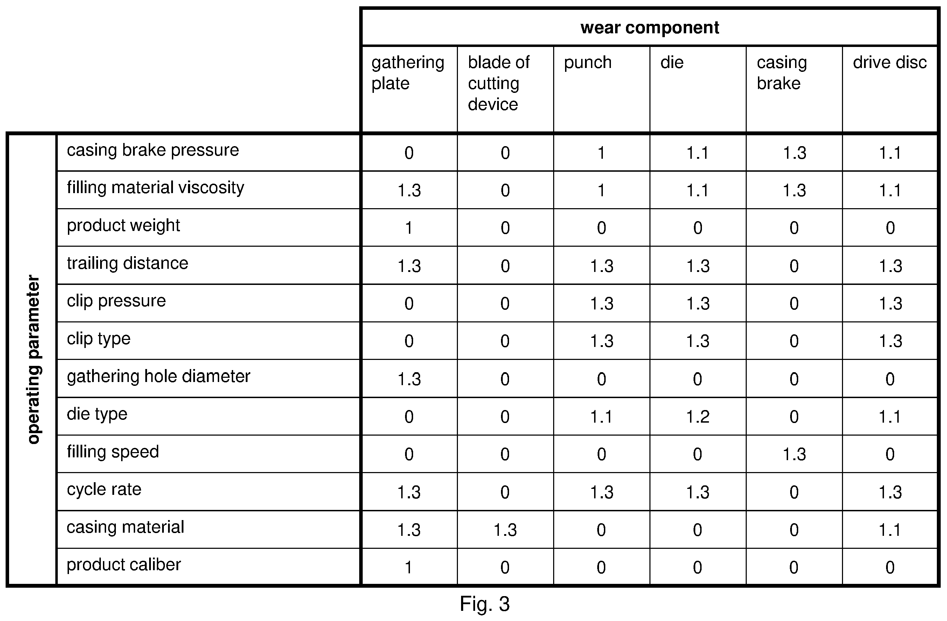

Fig. 3 shows an exemplary table illustrating correlations between different operating parameters Pᵢ and wear components 43. For illustrative purposes the correlation is quantified by a number, wherein a larger number represents a stronger correlation or larger effect of an operating parameter P on the wear of the respective wear component 43. As shown in the table, the effect on an operating parameter P on the wear components 43 can vary significantly. For example, the trailing distance between two sausage-shaped products S has a strong influence on the wear of the gathering plates 25, 27 while the wear of a blade of the cutting device 29 is not influenced by the trailing distance at all. For other wear components 43, the relevant operating parameters can be similar. The operating parameters P having an influence on the wear of the punch 17 and the die 19 are very similar. The only difference in the example embodiment is, that the operating parameter P "die type" has a stronger influence on the wear of the die 19 than on the wear of the punch 17. The exemplary table further shows that wear of a drive disc 59 of the clipping machine 3 is influenced by many of the operating parameters P while only one of the example operating parameters P has an influence on the wear of the blade of the cutting device 29.

Correlations between operating parameters P and wear of wear components 43, such as the correlations illustrated in Fig. 3, can be used as parameters or multipliers in the individual scaling function FSᵢ used by the wear scaling module 37 for determining the individual scaled wear value VS_{W,i} of the wear monitoring unit 35 associated with the respective wear component 43. For example, the individual scaling function FS₂₅ for the lower gathering plate 25 can be based on the operating parameters P: filling material viscosity, product weight, trailing distance, gathering hole diameter, cycle rate, casing material and product caliber.

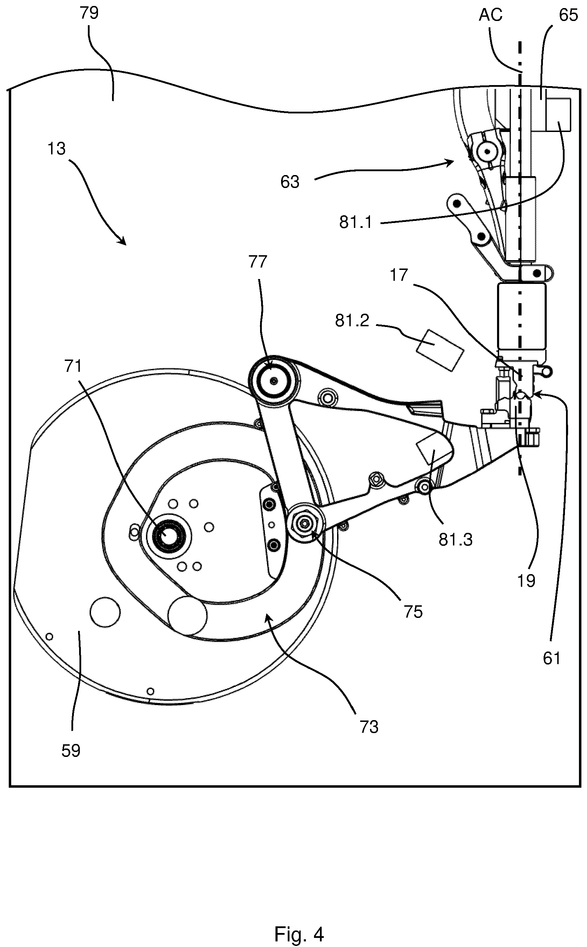

Fig. 4 shows a portion of an exemplary clipping device 13 of the clipping machine 3. For illustrative purposes some elements of the clipping device 13 have been omitted. The clipping device 13 comprises the punch 17 and the die 19. In the exemplary embodiment shown in Fig. 4, both the punch 17 and the die 19 are movable from a neutral or retracted position to an engagement position in a closing region 61. In the closing region 61 the punch 17 and the die 19 engage with each other for deforming a closure clip. The die 19 is linearly movable along a closing axis AC via a knee lever assembly 63. The knee lever assembly 63 is connected to a base plate 79 of the clipping machine 3 via a support 65. The clipping device 13 comprises a motor (not shown) for driving movement of the punch 17 along the closing axis AC. For driving the die 19, the clipping device 13 comprises a die drive assembly 67 including a die lever 69, the drive disc 59 and an electric motor (not shown). The electric motor is configured to rotate the drive disc 59 via a shaft 71. The drive disc 59 comprises a guide groove 73, in which a drive portion 75 of the die lever 69 is slidably received. A support portion 77 of the die lever is 69 rotatably supported on the base plate 79. Upon rotation of the drive disc 59, the drive portion 75 of the die lever 69 is moved dependent on the contour of the guide groove 73. Since the support portion 77 of the die lever 69 is supported on the base plate 65, the rotation of the drive disc 59 is translated into a pivoting motion of the die lever 69 which results in a movement of the die 19 fixed to the die lever 69.

Fig. 4 further illustrates sensors 81 of the clipping machine system 1. The sensors 81 are configured for acquiring sensor data, preferably sensor data indicative of a machine condition of the clipping machine 1. Here, a first sensor 81.1 is provided on the support 65 of the knee lever assembly 63. A second sensor 81.2 and a third sensor 81.3 are provided on the base plate 79. The first sensor 81.1 and the third second sensor 81.2 are vibrations sensors configured for acquiring sensor data representing vibrations of the clipping machine 1. In the preferred embodiment shown in Fig. 4, the third sensor 81.3 positioned on the base plate 79 is an acoustic sensor, in particular an ultrasonic sensor. Ultrasonic sounds generated by the clipping machine 1 during operation can be measured by the third sensor 81.3.

The wear scaling module 37 is configured to receive the sensor data from the sensors 81 and to additionally base the determination of the individual scaled wear value VSᵢ of at least some wear components 43 on the received sensor data or sensor signals respectively.

Preferably, the clipping machine system 1 comprises a state determination module 83. The state determination module 83 is configured to receive the acquired sensor signals and/or sensor date. The state determination module 83 is further configured to determine a wear state of at least one wear component 43 based on the received sensor signals/sensor data. For example, the state determination module 83 can be configured to determine, that the punch 17 is fully worn based on ultrasonic sounds generated during the closing process. Preferably, the clipping machine system 1, is configured to provide a predictive maintenance signal, if the state determination module 83 determines that at least one wear component 43 is worn out and/or that the wear state of at least one wear component 43 indicates that the wear component 43 will be worn out within a predefined time and/or number of operating cycles of the clipping machine 3.

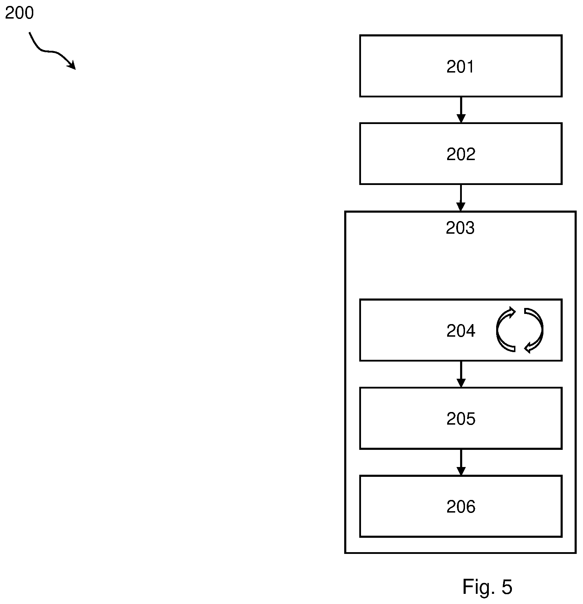

Fig. 5 illustrates a method 200 for operating a clipping machine system 1 for producing sausage-shaped products S. Here, the clipping machine system 1 is the clipping machine system 1 as described above with reference to figures 1 to 4.

In a first step 201 of the method, at least one operating parameter P of the clipping machine 3 is acquired. In particular, the operating parameter P is acquired by the control device 33. In a second step 202, that can be performed before, after or during the first step 201, a starting wear value V_{W, start, i} of a wear component 43 is determined. The clipping machine 3 is then operated to perform a number n of operating cycles for producing sausage-shaped products S as a third step 203. The control device 33 controls this operation of the clipping machine 3 based on the acquired operating parameters. For example, the control device 33 controls drive motors for driving the punch 17 and the die 19 such that a clip pressure applied to a closure clip equals a corresponding operating parameter P acquired in the first step 201. In a fourth step 204, that may be performed multiple times during the operation of the clipping machine 3, an individual scaled wear value VS_{W,i} for at least one wear component 43 is determined based on the acquired operating parameters P and using an individual scaling function FSᵢ corresponding to the respective wear component 43. In a fifth step 205 of the method 200, the wear value V_{w,i} for the wear component 43 is updated with the individual scaled wear value VS_{w,i}. The update can but must not be performed after each iteration of the fourth step 204. For example and preferably, the fifth step 206 is only performed prior to a sixth step 206 of the method 200, in which a status output O is provided to an interface 53 of the clipping machine system 1, and/or after at least one operating parameter P changes. As shown in Fig. 5, at least the fourth step 204, fifth step 205 and sixth step 206 can be performed during operation of the clipping machine according to the third step 203.

### List of reference signs

- 1: clipping machine system
- 3: clipping machine
- 5: filling tube
- 7: discharge opening
- 9: feed opening
- 11: casing brake assembly
- 13: clipping device
- 15: gathering means
- 17: punch
- 19: die
- 21: first displacer unit
- 23: second displacer unit
- 25: upper gathering plate
- 27: lower gathering plate
- 29: cutting device
- 31: discharge device
- 33: control device
- 35: wear monitoring unit(s)
- 37: wear scaling module
- 39: output module
- 41: interface
- 43: wear component(s)
- 45: control panel
- 47: data cable
- 49: memory
- 51: output module
- 53: interface
- 55: prediction module
- 57: log module
- 59: drive disc
- 61: closing region
- 63: knee lever assembly
- 65: support
- 67: die drive assembly
- 69: die lever
- 71: shaft
- 73: guide groove
- 75: drive portion of die lever
- 77: support portion of die lever
- 79: base plate
- 81: sensor
- 83: state determination module
- AC: closing axis AC
- C: Correlation
- CA: packaging casing
- DF: feeding direction
- DT: transport direction
- f: individual scaling function
- F: filling material
- FSᵢ: individual scaling function for wear component i
- L: suspension element / loop
- n: number of operating cycles
- O: status output
- P: operating parameter
- PU: user input parameter
- PP: plait-like portion
- S: sausage-shaped product
- SP: predictive maintenance signal
- ST: significance threshold
- T: wear threshold
- V_{w,i}: wear value of component i
- VS_{W,i}: individual scaled wear value of wear monitoring unit associated with wear component i
- W: wear counter associated with wear component i
- WSᵢ: individual scaled wear counter associated with wear component i

## Claims

1. A clipping machine system (1) including
a clipping machine (3) for producing sausage-shaped products (S), the clipping machine (3) comprising a plurality of wear components (43);
at least one control device (33) configured to control an operation of the clipping machine (3) and to acquire operating parameters (P) of the clipping machine (3);
at least one wear monitoring unit (35) for monitoring a wear value (V_{W,i}) of an associated wear component of the plurality of wear components (43) of the clipping machine (3);
at least one wear scaling module (37) configured to
receive the acquired operating parameter (P);
determine an individual scaled wear value (VS_{W,i}) for each wear monitoring unit (35) based on the received operating parameter (P) using an individual scaling function (FSᵢ), and
update the wear value (V_{W,i}) of each wear monitoring unit (35) with the respective determined individual scaled wear value (VS_{W,i}); and
an output module (39) configured to provide a status output (O) for at least one wear component (43) at an interface based (41) on the wear value (V_{W,i}) of the wear monitoring unit (35) associated with the at least one wear component (43).

2. The clipping machine system (1) of claim 1, wherein the wear scaling module (37) is configured to determine a number of operating cycles of the clipping machine (3) performed with the acquired operating parameters (P).

3. The clipping machine system (1) of claim 2,
wherein the wear value (V_{W,i}) comprises a wear counter (Wᵢ) representing wear cycles of the associated wear component (43),
wherein the wear scaling module (37) is configured to determine an individual scaled wear counter (WSᵢ) based on the received operating parameter (P) and the determined number of operating cycles performed by the clipping machine (3) using an individual scaling function, and
wherein the wear scaling module (37) is configured to update the wear counter (Wᵢ) based on the individual scaled wear counter (WSᵢ).

4. The clipping machine system (1) of claim 3, wherein the status output (O) includes the updated wear counter (Wᵢ).

5. The clipping machine system (1) of any one of the preceding claims, wherein the individual scaling function (FSᵢ) applies a wear factor based on at least one operating parameter (P).

6. The clipping machine system (1) of any one of the preceding claims, the system comprising at least a first wear monitoring unit (35.1) associated with a first wear component (43) of the clipping machine (3) and a second wear monitoring unit (35.2) associated with a second wear component (43) of the clipping machine (3), wherein a first individual scaling function (FS) for determining the individual scaled wear value (VS_{W,i}) of the first wear monitoring unit (35) differs from a second scaling function for determining the individual scaled wear value (VS_{W,i}) of the second wear monitoring unit (35), wherein the second scaling function preferably includes at least one operating parameter (P) different from the first scaling function.

7. The clipping machine system (1) of any of the preceding claims, wherein the individual scaling function (FSᵢ) has the following form: ${VS}_{i} = \frac{{PV}_{k = 1} \times {C}_{i , k = 1} + {PV}_{k = 2} \times {C}_{i , k = 2} + ⋯ + {PV}_{k = m} \times {C}_{i , k = m}}{m} \times Δ n$ wherein VS ᵢ represents the individual scaled wear value of wear component i, PV represents a parameter value of a parameter k of a number m of operating parameters (P), C_{i,k} represents a correlation between the respective parameter k and the wear component i, and Δn represents a number of operating cycles performed by the clipping machine (1) since the latest update of the wear value (V_{W,i}).

8. The clipping machine system (1) of any of the preceding claims, the system (1) further comprising a prediction module (55) configured to predict a remaining time until a respective wear value (V_{W,i}) of at least one wear component (43) exceeds a corresponding wear threshold, a remaining number of operating cycles until a respective wear value (V_{W,i}) of at least one wear component (43) exceeds a corresponding wear threshold and/or a point in time in that a respective wear value (V_{W,i}) of at least one wear component (43) is exceeds a corresponding wear threshold, wherein the status output (O) preferably includes the predicted remaining time, the predicted remaining number of operating cycles and/or the predicted point in time.

9. The clipping machine system (1) of claim 8, wherein the output module (39) is configured to provide a predictive maintenance signal (SP) when the wear value (V_{W,i}) of at least one wear component (43) is predicted to exceed the corresponding threshold within a predefined time or number of operating cycles of the clipping machine (3).

10. The clipping machine system (1) of any of the preceding claims, the system (1) further comprising at least one sensor (81) for acquiring sensor data indicative of a machine condition of the clipping machine (3), wherein the sensor (81) preferably is or comprises a vibration sensor and/or a ultrasonic sensor.

11. The clipping machine system (1) of claim 10, wherein the at least one wear scaling module (37) is configured to receive the acquired sensor data and to determine the individual scaled wear value (VS_{W,i}) for each wear monitoring unit (35) based on the received operating parameter (P) and the received sensor date using the individual scaling function (FSᵢ).

12. The clipping machine system (1) of claim 10 or 11, further comprising at least one state determination module (83) configured to determine a wear state of at least one wear component (43) associated with the state determination module (83) based on the sensor data.

13. The clipping machine system (1) of any of the preceding claims, further comprising a log module (57) configured to log operating parameters (P), wear values (V_{W,i}) and/or status outputs (O), wherein the log module (57) is preferably configured to log at least the operating parameters (P) for each operating cycle of the clipping machine (3), and/or wherein the log module (57) is preferably configured to store at least a wear incident of a wear component (43).

14. A method (200) for operating a clipping machine system (1) for producing sausage-shaped products (S), in particular a clipping machine system (1) according to any of the preceding claims, the method (200) comprising the steps of:
- acquiring (201) at least one operating parameter (P) of the clipping machine (3);
- determining (202) a starting wear value (V_{W,i}) for at least one wear component (43) of the clipping machine (1);
- operating (203) the clipping machine (3) with the provided operating parameter (P) to perform at least one operating cycle;
- determining (204) an individual scaled wear value (VS_{W,i}) for the wear component (43) based on the operating parameter (P) using an individual scaling function (FSᵢ),
- updating (205) the wear value (V_{W,i}) for the wear component (43) with the individual scaled wear value (VS_{W,i}).

15. Computer program product, comprising program code means configured to execute the method (200) of claim 14 when executed on a clipping machine system (1).
